# EUROPÄISCHE PATENTSCHRIFT

(11) **EP 2 176 352 B1**
(45) Veröffentlichungstag und Bekanntmachung des Hinweises auf die Patenterteilung: **18.05.2016**
(21) Anmeldenummer: 08786567.1
(22) Anmeldetag: 29.07.2008
(51) Int. Cl.: C08L 83/08

(54) **VERNETZBARE MASSEN AUF DER BASIS VON ORGANOSILICIUMVERBINDUNGEN**
CROSS-LINKABLE MASSES BASED ON ORGANOSILICON COMPOUNDS
COMPOSITIONS RÉTICULABLES À BASE DE COMPOSÉS D'ORGANOSILICIUM

(30) Priorität: 07.08.2007 DE 102007037198
(43) Veröffentlichungstag der Anmeldung: 21.04.2010
(73) Patentinhaber: Wacker Chemie AG, 81737 München (DE)
(72) Erfinder: SCHÖLEY, Peter, 01665 Diera-zehren (DE); SCHEIM, Uwe, 01640 Coswig (DE); SCHNEIDER, Otto, 84489 Burghausen (DE)
(74) Vertreter: Budczinski, Angelika
(86) Internationale Anmeldenummer: PCT/EP2008/059929
(87) Internationale Veröffentlichungsnummer: WO 2009/019166

(56) Entgegenhaltungen:
- EP-A- 0 885 931
- WO-A-2005/108495

## Beschreibung

Die Erfindung betrifft bei Raumtemperatur durch Kondensationsreaktion zu dauerelastischen Materialien vernetzbare Massen auf der Basis von Organosilciumverbindungen in Form von Mehrkomponentensystemen, Verfahren zu deren Herstellung sowie deren Verwendung.

Bei Raumtemperatur durch Kondensationsreaktion zu elastischen Materialien vernetzbare Systeme auf Basis von Organosiliciumverbindungen mit hydrolysierbaren Gruppen sind bekannt. Sie werden als sogenannte Einkomponentensysteme (RTV-1) und Zweikomponentensysteme (RTV-2) für den Verarbeiter bereitgestellt. Der Unterschied zwischen beiden Systemen besteht vor allem darin, dass Einkomponentensysteme langsam durch Eindiffundieren von Luftfeuchtigkeit von der Oberfläche her bis in tiefere Schichten aushärten, während Zweikomponentensysteme nach dem Vermischen der beiden Komponenten sehr schnell auch in tiefen Schichten vernetzen. Die leicht verarbeitbaren Einkomponentensysteme sind demzufolge beispielsweise sehr gut zum Abdichten von Bauwerksfugen eignen. Oft wird jedoch eine schnelle Aushärtung auch bis in tiefere Schichten gewünscht, beispielsweise bei Abform- oder Vergussmassen. In diesem Fall werden Zweikomponentensysteme benötigt, die bereits alle zur Aushärtung benötigten Bestandteile enthalten.

Üblicherweise werden alle Bestandteile eines Zweikomponentensystems so auf zwei Komponenten aufgeteilt, dass lagerstabile Vormischungen entstehen. So werden beispielsweise langkettige Polymere mit Silanolgruppen und gegebenenfalls Wasser in einer Komponente vereinigt und Organosilciumverbindungen mit hydrolysierbaren Gruppen und Katalysatoren in einer zweiten. Außer diesen vier Hauptbestandteilen enthalten die Massen häufig weitere Inhaltsstoffe, wie zum Beispiel Füllstoffe, Weichmacher und verschiedenste Additive.

Bekannte Katalysatoren für bei Raumtemperatur durch Kondensationsreaktion vernetzende Zweikomponenten-Massen sind zinnorganische Verbindungen. Ein Nachteil dieser Katalysatoren besteht darin, dass sie ökologisch nicht unbedenklich sind. Dennoch werden sie in relativ großen Mengen verwendet. Außerdem neigen diese Massen bei höheren Temperaturen wegen der Anwesenheit großer Katalysatormengen sehr stark zur Reversion. Nachteilig an bisher bekannten Zweikomponentensystemen ist weiterhin, dass die Aushärtung unter einer ungewollten starker Schrumpfung der Massen erfolgt, denn die in großen Mengen entstehenden Hydrolyseprodukte werden an die Umgebung abgegeben. Dieser Nachteil wird noch dadurch verstärkt, dass die Vernetzer zur sicheren Aushärtung der Massen in großem stöchiometrischen Überschuss zugesetzt werden müssen. So beschreibt EP-B1-595 531 die Verwendung besonders hoher Katalysatormengen in Abformmassen. Weiterhin wird darin die Verwendung von Alkoxysilanen als Vernetzer beschrieben, deren Alkoxyreste eine besonders große Molmasse aufweisen. Durch die große Molmasse wird der bestehende Nachteil der beträchtlichen Schrumpfung noch verstärkt.

Gegenstand der Erfindung sind durch Kondensationsreaktion vernetzbare Massen in Form einer 2-Komponenten-Zusammensetzung, dadurch gekennzeichnet, dass es sich um solche (Masse 3) handelt, enthaltend
Komponente (A) bestehend aus
   - im Wesentlichen lineare Siloxane (1) mit jeweils einer Endgruppe [A-CR¹₂] an einem jeden Kettenende, wobei A gleich oder verschieden sein kann und einen über Stickstoff, Sauerstoff, Schwefel oder Phosphor gebundenen organischen Rest bedeutet und R¹ gleich oder verschieden sein kann und Wasserstoffatom oder einwertige, gegebenenfalls substituierte Kohlenwasserstoffreste darstellt, gegebenenfalls Katalysator (3), gegebenenfalls weiteren Vernetzer (4), gegebenenfalls basischen Stickstoff aufweisende Verbindung (5), Füllstoffe (6), Weichmacher (8) und Additive (9), sowie
Komponente (B) bestehend aus
   - im Wesentlichen linearen OH-terminierten Organopolysiloxanen (22), gegebenenfalls basischen Stickstoff aufweisende Verbindung (5), Füllstoffe (6), Weichmacher (8) und Additive (9).

Bei der erfindungsgemäß eingesetzten Organosilciumverbindung (1) kann es sich um oligomere oder polymere Verbindungen handeln.

Bei den erfindungsgemäß eingesetzten Organosiliciumverbindungen (1) kann es sich um Siloxane, d.h. Verbindungen enthaltend Einheiten der Formel

[A-CR¹₂]_{c}SiRₐY_{b}O_{(4-a-b-c) /2} (I)

handeln, wobei
A gleich oder verschieden sein kann und einen über Stickstoff, Sauerstoff, Schwefel oder Phosphor gebundenen organischen Rest bedeutet,
R gleiche oder verschiedene, einwertige, gegebenenfalls substituierte Kohlenwasserstoffreste bedeutet,
R¹ gleich oder verschieden sein kann und Wasserstoffatom oder einwertige, gegebenenfalls substituierte Kohlenwasserstoffreste darstellt,
Y gleich oder verschieden sein kann und einen hydrolysierbaren Rest bedeutet,
a gleich 0, 1, 2 oder 3, bevorzugt 0, 1 oder 2, besonders bevorzugt 0 oder 2, ist,
b gleich 0, 1, 2 oder 3, bevorzugt 0, 2 oder 3, ist und
c gleich 0, 1 oder 2, bevorzugt 0 oder 1, ist, mit der Maßgabe, dass die Summe aus a+b+c≤3 ist und die Organosiliciumverbindung (1) mindestens eine Einheit mit c verschieden 0 sowie mindestens zwei Reste Y aufweist.

Bei den erfindungsgemäß eingesetzten Organosiliciumverbindungen (1) kann es sich auch um Polymere auf organischer Basis handeln. Als Polymere auf organischer Basis im Sinne der vorliegenden Erfindung sind alle Polymere enthaltend mindestens eine Einheit der Formel (I) zu verstehen, bei denen mindestens 50%, bevorzugt mindestens 70%, besonders bevorzugt mindestens 90%, aller Bindungen in der Hauptkette Kohlenstoff-Kohlenstoff-, Kohlenstoff-Stickstoff- oder Kohlenstoff-Sauerstoff-Bindungen sind.

Vorzugsweise handelt es sich bei den erfindungsgemäß eingesetzten Organosiliciumverbindungen (1) um Siloxane, die aus Einheiten der Formel (I) bestehen.

Besonders bevorzugt handelt es sich bei den erfindungsgemäß eingesetzten Organosiliciumverbindungen (1) um Siloxane, die aus 10 bis 2000 Einheiten der Formel (I) bestehen.

Bei den Siloxanen (1) handelt es sich um im Wesentlichen lineare Siloxane mit einer Endgruppe der Formel (I) mit c gleich 1 an einem jeden Kettenende. Herstellungsbedingt können zusätzlich zu den linearen Siloxanen monomere Silane vorhanden sein.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest und der Heptafluorisopropylrest, Halogenarylreste, wie der o-, m- und p-Chlorphenylrest, und der 2-Methoxyethylrest, der 2-Methoxypropylrest sowie der 2-(2-Methoxyethoxy)ethylrest.

Bevorzugt handelt es sich bei Rest R um gegebenenfalls substituierte, einwertige Kohlenwasserstoffreste mit 1 bis 18 Kohlenstoffatomen, besonders bevorzugt um Alkylreste, den Vinyl-, den 3,3,3-Trifluorprop-1-yl- und den Phenylrest, insbesondere um den Methylrest.

Beispiele für Reste R¹ sind Wasserstoffatom sowie die für R angegebenen Reste.

Bevorzugt handelt es sich bei Rest R¹ um Wasserstoffatom und Kohlenwasserstoffreste mit 1 bis 20 Kohlenstoffatomen, insbesondere um Wasserstoffatom.

Bei Rest A handelt es sich bevorzugt um Reste R³R⁴N-, R⁵O-, R⁹S-, (R¹⁰O)₂P(=O)- und O=C=N-, wobei R³ und R⁴ jeweils unabhängig voneinander Wasserstoffatom oder einwertige, gegebenenfalls substituierte Kohlenwasserstoffreste bedeuten, wobei die Gruppierung R³R⁴N- auch zu einem Ring verbunden sein kann, der auch noch andere Elemente anstelle von Kohlenstoffatomen enthalten kann, R⁵ einen gegebenenfalls substituierten Kohlenwasserstoffrest bedeutet oder einen Rest CH₃(C=CH₂)-(C=O)- und CH₃-O-(C=O)-darstellt, R⁹ und R10 jeweils unabhängig voneinander gleich oder verschieden sein können und einen gegebenenfalls substituierten Kohlenwasserstoffrest bedeuten.

Beispiele für Reste R³ und R⁴ sind Wasserstoffatom und die für R oben angegebenen Beispiele.

Beispiele für Reste R⁵, R⁹ und R¹⁰ sind jeweils unabhängig voneinander die für R oben angegebenen Beispiele für Kohlenwasserstoffreste.

Bevorzugt handelt es sich bei Rest R³ um Methyl-, Ethyl-, Propyl-, Butyl-, Hexyl-, Phenyl-, Cyclohexyl- oder Octylrest.

Bevorzugt handelt es sich bei Rest R⁴ um Methyl-, Ethyl-, Propyl-, Butyl-, Hexyl- oder Octylrest oder um Wasserstoffatom.

Besonders bevorzugt bildet die Gruppierung R³R⁴N- einen Ring, der insbesondere noch Sauerstoff oder weiteren Stickstoff enthält.

Weiterhin können die Reste R³ oder R⁴ auch einen Ring mit R¹ bilden, was allerdings nicht bevorzugt ist.

Bevorzugt handelt es sich bei Rest R⁵ um um den Rest CH₃(C=CH₂)-(C=O)- und den Rest CH₃-O-(C=O)-.

Bevorzugt handelt es sich bei Rest R⁹ um Methyl-, Ethyl-, Propyl-, Butyl-, Hexyl- oder Octylrest.

Bevorzugt handelt es sich bei Rest R¹⁰ um Methyl-, Ethyl-, Propyl-, Butyl-, Hexyl- oder Octylrest.

Beispiele für Reste A sind der Dimethylamino-, Diethylamino-, der Dibutylamino-, der Dihexylamino-, der n-Hexylamino-, der Octylamino-, Methylmercapto-, der Ethylmercapto-, der Ethoxy-, der N-Cyclohexylamino-, der N-Phenylamino-, der Methacryloxy-, der Isocyanato-, der N-Morpholino-, der N-Pyrrolidino-, der N-Piperidino- und der O-Methylcarbamato-Rest.

Besonders bevorzugte Reste A sind die Reste R³R⁴N-mit R³ und R⁴ gleich eine der obengenannten Bedeutungen und ganz besonders bevorzugt Reste R³HN- sowie solche Reste R³R⁴N-, in denen die Gruppierung R³R⁴N- zu einem Ring verbunden ist, insbesondere R³HN- sowie solche Reste R³R⁴N-, in denen die Gruppierung R³R⁴N-zu einem Ring verbunden ist, der noch Sauerstoff oder weiteren Stickstoff enthält.

Bei ringförmigen Resten A gleich R³R⁴N- handelt es sich bevorzugt um 3-, 4-, 5-, 6-, 7- oder 8-gliedrige Heterocyclen, die als ringbildende Atome neben Kohlenstoff und Stickstoff Phosphor und/oder Sauerstoff und/oder Schwefel als Heteroatom aufweisen können, wobei auch weitere Ringe annelliert sein können.

Besonders bevorzugt handelt es sich bei den Heterocyclen, auf denen diese Reste A basieren, um 5- und 6-gliedrige Heterocyclen, die neben dem zur Bindung zum CR¹₂-Rest der Verbindungen der Formel (I) vorliegenden Stickstoffatom ein weiteres Ringheteroatom enthalten.

Beispiele für Heterocyclen, auf welchen die ringförmigen Reste A basieren, sind Aziridin, Azetidin, Pyrrol, Pyrrolidin, 1,3-Oxazolidin, 1,3-Thiazolidin, 1H-1,2-Diazol, Δ²-1,2-Diazolin, Δ⁴-1,2-Diazolin, 1,3-Diazol, Δ²-1,3-Diazolin, Δ⁴-1,3-Diazolin, 1,3-Diazolidin, 1,2,3-Triazol, 1,2,4-Triazol, Tetrazol, Δ⁴-1,2-diazolin-3-on, Piperidin, Tetrahydro-1,4-oxazin, Tetrahydro-1,4-thiazin, Hexahydro-1,3-diazin, Hexahydro-1,4-diazin, 1-Methyl-hexahydro-1,4-diazin, Hexahydro-1,3,5-triazin, Hexahydro-1,3-diazin-4-on, 4-Methylhexahydro-1,4-diazin-3-on, 1H-Azepin, Hexahydroazepin, Octahydroazocin, 1H-Benzo[b]pyrrol, 2,3-Dihydrobenzo[b]pyrrol, 9H-Dibenzopyrrol, Benzo[d]-1,2-diazol, Benzo[d]-1,3-diazol und Benzo[d]-1,2,3-triazol.

Besonders bevorzugt für Heterocyclen, auf welchen die ringförmigen Reste A basieren, sind Pyrrolidin, Piperidin, Tetrahydro1,4-oxazin, Tetrahydro-1,4-thiazin, Tetrahydro-1,4-diazin und 1-Methyltetrahydro-1,4-diazin, insbesondere Tetrahydro-1,4-oxazin.

Beispiele für Reste Y sind alle bisher bekannten hydrolysierbaren Reste, wie z.B. Halogenatome, Organyloxyreste, Si-N-gebundene Aminreste, Amidreste, Oximreste, Acyloxyreste und Aminoxyreste.

Bevorzugt handelt es sich bei Rest Y um Organyloxyreste, wie Methoxy-, Ethoxy-, n-Propoxy-, i-Propoxy-, n-Butoxy-, i-Butoxy-, s-Butoxy-, tert-Butoxy- und 2-Methoxyethoxyresyt; Acyloxyreste, wie der Acetoxyrest; Aminoreste, wie Methylamino-, Dimethylamino-, Ethylamino-, Diethylamino- und Cyclohexylaminorest; Amidoreste, wie N-Methylacetamido- und Benzamidorest; Aminoxyreste, wie der Diethylaminoxyrest; Oximoreste, wie Methylethylketoximo- und Methylisobutylketoximorest; und Enoxyreste, wie der 2-Propenoxyrest, besonders bevorzugt um den Methoxy-, Ethoxy-, Acetoxy-, Methylethylketoximo-, Methylisobutylketoximo-, Dimethylamino- und Cyclohexylaminorest, insbesondere um den Methoxy- oder Ethoxyrest.

Beispiele für polymere Organosiliciumverbindung (1) sind Gruppen der Formel (I) mit c verschieden 0 aufweisende organische Polymere, wie Polyisobutylen und Copolymere von Polyisobutylen mit Isopren; Polychloroprene; Polyisopren; Polyurethane; Polyester; Polyamide; Polyacrylate; Polymetacrylate; Vinylpolymer und Polycarbonate, oder Polyorganosiloxane. Die Herstellung dieser Polymere kann durch bekannten Verfahren erfolgen, wie Additionsreaktionen, wie z.B. der Hydrosilylierung, Michael-Addition, Diels-Alder-Addition, der Addition von Isocyanat an aktiven Wasserstoff aufweisende reaktive Gruppen, wie Amine, Amide, Hydroxyl- oder Mercaptogruppen, der Polykondensation von kurzkettigen Polyorganosiloxandiolen sowie der Addition von Epoxiden mit Aminen oder der Copolymerisation von Vinylsilanen mit organischen Doppelbindung aufweisenden Monomeren bzw. der Pfropfung von Vinylsilanen an Vinylpolymere. Die Herstellmethoden können gegebenenfalls miteinander kombiniert werden.

Als polymere Organosiliciumverbindung (1) können aber auch Copolymere aus Siloxanblöcken und organischen Polymeren verwendet werden, mit der Maßgabe, dass sie mindestens eine Einheit der Formel (I) mit c verschieden 0 enthalten, wie z.B. in EP-B1 1 370 602 beschrieben, die zum Offenbarungsgehalt der vorliegenden Anmeldung zu zählen ist.

Bei den erfindungsgemäß eingesetzten polymeren Organosiliciumverbindung (1) kann es sich um Homopolymere wie auch um Copolymere handeln, die jeweils linear oder verzweigt sein können.

Beispiele für Organosiliciumverbindung (1) gleich Siloxane aus Einheiten der Formel (I) sind Reaktionsprodukte aus Polydiorganosiloxandiolen mit einer Viskosität von 10 bis 10 000 000 mPa·s bei 25°C und Silanen der Formel (1), wie
(MeO) ₂ (Morpholinomethyl) SiO (SiMe₂O) ₁₀₋₂₀₀₀SiMe₂OSi(Morpholinomethyl) (OMe)₂,
(EtO)₂ (Morpholinomethyl) SiO (SiMe₂O) ₁₀₋₂₀₀₀SiMe₂OSi (Morpholinomethyl) (OEt₂, ₂,
(EtO)₂ (Morpholinomethyl) SiO (SiMe₂O) ₁₀₋₂₀₀₀SiMe₂OSi(Morpholinomethyl) (OMe)₂,
(EtO)₂ (Cyclohexylaminomethyl) SiO (SiMe₂O) ₁₀₋₂₀₀₀SiMe₂OSi (Cyclohexylaminomethyl) (OEt)₂,
(EtO)₂ (Cyclohexylaminomethyl) SiO (SiMe₂O) ₁₀₋₂₀₀₀SiMe₂OSime(Cyclohexylaminomethyl) (OEt),
(EtO)₂ (Dibutylaminomethyl) SiO(SiMe₂O)₁₀₋₂₀₀₀SiMe₂OSi (Dibutylaminomethyl) (OEt)₂,
(EtO)₂ (Cyclohexylaminomethyl) SiO (SiMe₂O)₁₀₋₂₀₀₀SiMe₂OSi(OEt)₃, (CH₃COO)₂ (Morpholinomethyl) SiO (SiMe₂O)₁₀₋₂₀₀₀SiMe₂OSi(Morpholinomethyl) (CH₃COO)₂,
(EtO)₂ (Cyclohexylaminomethyl) SiO (SiMe₂O)₁₀₋₂₀₀₀SiMe₂OSi(Morpholinomethyl) ((OEt)2,
wobei Me gleich Methylrest und Et gleich Ethylrest ist.

Falls es sich bei Organosiliciumverbindung (1) um polymere Verbindungen handelt, sind diese ebenfalls bevorzugt bei Raumtemperatur flüssig und weisen dynamische Viskositäten bei 25°C von bevorzugt 10 bis 1 000 000 mPas auf.

Bei den Organosiliciumverbindungen (1) handelt es sich um handelsübliche Produkte bzw. können nach in der Siliciumchemie gängigen Methoden hergestellt werden.

Beispiele sowie bevorzugte und besonders bevorzugte Bereiche für Rest R² sind die für R angegebenen Beispiele.

Bei den erfindungsgemäß gegebenenfalls eingesetzten Organosiliciumverbindungen (22) handelt es sich um Siloxane, d.h. Verbindungen enthaltend Einheiten der Formel (II) mit x+y≤3. Vorzugsweise handelt es sich bei den erfindungsgemäß eingesetzten Organosiliciumverbindungen (22) um Organopolysiloxane, die aus Einheiten der Formel (II) bestehen.

Bei den erfindungsgemäß eingesetzten Organosiliciumverbindungen (22) handelt es sich um im Wesentlichen lineare, OH-terminierte Organopolysiloxane, insbesondere um α,ω- Dihydroxydiorganopolysiloxane.

Beispiele für Organosiliciumverbindungen (22) sind (HO)Me₂SiO[SiMe₂O]₅₋₂₀₀₀SiMe₂(O_{H}),
(HO)Me₂SiO[SiMe₂O]₅₋₂₀₀₀[SiMeViO]₁₋₁₀₀SiMe₂(OH) und
(HO)Me₂SiO[SiMe₂O]₅₋₂₀₀₀[SiMePhO]₁₋₁₀₀SiMe₂(OH),
wobei Me den Methylrest, Vi den Vinylrest und Ph den Phenylrest bedeutet.

Die erfindungsgemäß eingesetzten Organosiliciumverbindungen (22) haben eine Viskosität von bevorzugt 10 bis 10⁶ mPas, besonders bevorzugt von 10³ bis 350 000 mPas, jeweils bei 25°C.

Bei den Organosiliciumverbindungen (22) handelt es sich um handelsübliche Produkte bzw. können nach in der Siliciumchemie gängigen Methoden hergestellt werden.

Falls in den erfindungsgemäßen Massen Organosilciumverbindung (22) eingesetzt wird, beträgt das stöchiometrische Verhältnis von hydrolysierbaren Gruppen Y der Organosilciumverbindung (1) zur Summe der Silanolgruppen der Organosilciumverbindung (22) bevorzugt 0,05 bis 30, besonders bevorzugt 0,1 bis 20, insbesondere 0,2 bis 10.

Zusätzlich zu der oben beschriebenen Bestandteilen (1) und (2) können die erfindungsgemäßen Massen nun alle Stoffe enthalten, die auch bisher in durch Kondensationsreaktion vernetzbaren Massen eingesetzt worden sind, wie z.B. Katalysatoren (3), weitere Vernetzer (4), basischen Stickstoff aufweisende Verbindung (5), Füllstoffe (6), Haftvermittler (7), Weichmacher (8) und Additive (9), wobei Bestandteile (4), (5) und (7) verschieden sind zu Bestandteil (1).

Beispiele für Katalysatoren (3) sind die bisher schon bekannten Titanverbindungen wie Tetraisopropoxytitanat, Zinkverbindungen wie Zink(2-ethylhexoat)und organische Zinnverbindungen, wie Din-butylzinndilaurat und Di-n-butylzinndiacetat, Di-n-butylzinnoxid, Dioctylzinndiacetat, Dioctylzinndilaurat, Dioctylzinnoxid sowie Umsetzungsprodukte dieser Verbindungen mit Alkoxysilanen wie Tetraethoxysilan, wobei Di-n-octylzinndiacetat und Dioctylzinnoxid in Tetraethylsilikat-Hydrolysat bevorzugt sind und Din-octylzinnoxid in Tetraethylsilikat-Hydrolysat besonders bevorzugt ist.

Falls in den erfindungsgemäßen Massen Katalysatoren (3) eingesetzt werden, handelt es sich um Mengen von bevorzugt 0,0001 bis 5,0 Gew.-%, besonders bevorzugt 0,0001 bis 1,0 Gew.-%, jeweils bezogen auf die erfindungsgemäße vernetzbare Masse.

Falls zinnorganische Verbindungen als Katalysatoren (3) eingesetzt werden, handelt es sich um Mengen von bevorzugt 0,0001 bis 0,1 Gew.-%, besonders bevorzugt 0,0001 bis 0,05 Gew.-%, jeweils bezogen auf die erfindungsgemäße vernetzbare Masse. Bevorzugt enthalten die erfindungsgemäßen Massen keinen zinnorganischen Katalysator (3).

Bei den in den erfindungsgemäßen Massen gegebenenfalls eingesetzten weiteren Vernetzern (4) kann es sich um beliebige, bisher bekannte Vernetzer mit mindestens drei hydrolysierbaren Resten handeln, wie beispielsweise Silane mit mindestens drei Organyloxygruppen, die von Bestandteil (1) verschieden sind.

Besonders bevorzugt handelt es sich bei den in den erfindungsgemäßen Massen gegebenenfalls eingesetzten weiteren Vernetzern (4) um Silanvernetzer, wie Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 3-Cyanopropyltrimethoxysilan, 3-Cyanopropyltriethoxysilan, 3-(Glycidoxy)propyl-triethoxysilan, 1,2-Bis(trimethoxysilyl)ethan, 1,2-Bis(triethoxysilyl)ethan, Cyclohexylaminomethyltriethoxysilan, Methyltriacetoxysilan, Ethyltriacetoxysilan, Methyltris(methylethylketoximo)silan und Vinyltris(methylethylketoximo)silan sowie deren Teilhydrolysate.

Die in den erfindungsgemäßen Massen gegebenenfalls eingesetzten weiteren Vernetzer (4) sind handelsübliche Produkte bzw. können nach in der Siliciumchemie bekannten Verfahren hergestellt werden.

Falls die erfindungsgemäßen Massen weitere Vernetzer (4) enthalten, handelt es sich um Mengen von vorzugsweise 0,01 bis 10 Gewichtsteilen, besonders bevorzugt 0,1 bis 5 Gewichtsteilen, ganz besonders bevorzugt 0,2 bis 3 Gewichtsteilen, jeweils bezogen auf 100 Gewichtsteile der erfindungsgemäßen Masse. Bevorzugt enthalten die erfindungsgemäßen Massen zusätzlichen Vernetzer (4).

Bei den erfindungsgemäß gegebenenfalls eingesetzten, basischen Stickstoff aufweisenden Verbindungen (5) handelt es sich vorzugsweise um solche, ausgewählt aus der Gruppe bestehend aus Verbindungen der Formel

NR⁶₃ (III),

wobei R⁶ gleich oder verschieden sein kann und Wasserstoffatom oder Kohlenwasserstoffreste, die gegebenenfalls mit Hydroxygruppen, Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen- und/oder Oxypropyleneinheiten aufgebaut sind, bedeutet, mit der Maßgabe, dass in Formel (III) höchstens zwei R⁶ die Bedeutung von Wasserstoffatom haben und, falls zwei R⁶ vorhanden sind, können diese auch miteinander zu cyclischen Strukturen verknüpft sein,
sowie Organosiliciumverbindungen mit mindestens einem basischen Stickstoff aufweisenden organischen Rest, die unterschiedlich sind zu Bestandteil (1), aus Einheiten der Formel

R⁷ₖX₁Si(OR⁸)ₘO_{(4-k-1-m)/2} (IV),

worin
R⁷ gleich oder verschieden sein kann und einen einwertigen, SiC-gebundenen, von basischem Stickstoff freien organischen Rest bedeutet,
R⁸ gleich oder verschieden sein kann und eine für Rest R² angegebene Bedeutung hat,
X gleich oder verschieden sein kann und einen einwertigen, SiC-gebundenen Rest mit basischem Stickstoff bedeutet,
k 0, 1, 2, oder 3 ist,
1 0, 1, 2, 3 oder 4 ist und
m 0, 1, 2 oder 3 ist,
mit der Maßgabe, dass die Summe aus k+l+m kleiner oder gleich 4 ist und pro Molekül mindestens ein Rest X anwesend ist.

Beispiele für Rest R⁶ und R⁷ sind jeweils unabhängig voneinander die für R angegebenen Beispiele für gegebenenfalls substituierte Kohlenwasserstoffreste.

Bei den gegebenenfalls substituierten Kohlenwasserstoffresten R⁶ handelt es sich vorzugsweise um solche mit 1 bis 18 Kohlenstoffatomen.

Bei Rest R⁷ handelt es sich vorzugsweise um Kohlenwasserstoffreste mit 1 bis 18 Kohlenstoffatomen, wobei der Methyl-, Ethyl- und n-Propylrest besonders bevorzugt sind, insbesondere der Methylrest.

Beispiele für Rest R⁸ sind die für Rest R² angegebenen Beispiele.

Vorzugsweise handelt es sich bei Rest R⁸ um den Methyl- und Ethylrest.

Beispiele für Reste X sind Reste der Formeln H₂NCH₂-, H₂N(CH₂)₂-, H₂N(CH₂)₃-, H₂N(CH₂)₂NH(CH₂)₂-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, H₃CNH(CH₂)₂-, C₂H₅NH(CH₂)₂-, H₂N(CH₂)₄-, H₂N(CH₂)₅-, H(NHCH₂CH₂)₃-, C₄H₉NH(CH₂)₂NH (CH₂)₂-, cyclo-C₆H₁₁NH(CH₂)₃-, cyclo-C₆H₁₁NH(CH₂)₂-, (CH₃)₂N(CH₂)₃-, (CH₃)₂N(CH₂)₂-, (C₂H₅)₂N(_{C}H₂)₃- und (C₂H₅)₂N(CH₂)₂-.

Bevorzugt handelt es sich bei X um H₂N(CH₂)₃-, H₂N(CH₂)₂NH(CH₂)₃-, H₃CNH(CH₂)₃-, C₂H₅NH(CH₂)₃- und cyclo-C₆H₁₁NH(CH₂)₃-Rest, wobei H₂N(CH₂)₂NH(CH₂)₃- und cyclo-C₆H₁₁NH(CH₂)₃-Rest besonders bevorzugt sind.

Handelt es sich bei den Organosiliciumverbindungen aus Einheiten der Formel (IV) um Silane, so ist k bevorzugt 0, 1 oder 2, besonders bevorzugt 0 oder 1, 1 bevorzugt 1 oder 2, besonders bevorzugt 1, und m bevorzugt 1, 2 oder 3, besonders bevorzugt 2 oder 3, mit der Maßgabe, dass die Summe aus k+l+m gleich 4 ist.

Beispiele für die erfindungsgemäß gegebenenfalls eingesetzten Silane der Formel (IV) sind H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, cyClo-C₆H₁₁NH(CH₂)₃-Si(OCH₃)₃, cyclo-C₆H₁₁NH(CH₂)₃-Si(OC₂H₅)₃ sowie deren Teilhydrolysate, wobei H₂N(CH₂)₃-Si(OC₂H₅)₃, H₂N(CH₂)₂NH(CH₂)₃-Si(OCH₃)₃, H₂N(CH₂)₂NH(CH₂)₃-Si(OC₂H5)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₃-Si(OH)₂CH₃, cyclo-C₆H₁₁NH(CH₂)₃-Si(OCH₃)₃ und cyclo-C₆H11NH(CH₂)₃-Si(OC₂H₅)₃ bevorzugt und H₂N(CH₂)₃-Si(OC₂H₅)₃, H₂N(CH₂)₂NH(CH₂)₃-Si(OCH₃)₃ und cyclo-C₆H₁₁NH(CH₂)₃-Si(OCH₃)₃ sowie jeweils deren Teilhydrolysate besonders bevorzugt sind.

Falls es sich bei der Organosiliciumverbindung aus Einheiten der Formel (IV) um Organopolysiloxane handelt, ist der durchschnittliche Wert von k vorzugsweise zwischen 0,5 und 2,5, besonders bevorzugt zwischen 1,4 und 2,0, der durchschnittliche Wert von 1 vorzugsweise zwischen 0,01 und 1,0, besonders bevorzugt zwischen 0,01 und 0,6, und der durchschnittliche Wert von m vorzugsweise zwischen 0 und 2,0, besonders bevorzugt zwischen 0 und 0,2, mit der Maßgabe, dass die Summe aus k, 1 und m kleiner oder gleich 3 ist.

Die erfindungsgemäß einsetzbaren Organopolysiloxane aus Einheiten der Formel (IV) haben eine Viskosität bei 25°C von vorzugsweise 5 bis 10⁵ mPas, besonders bevorzugt von 10 bis 10⁴ mPas.

Beispiele für die erfindungsgemäß einsetzbaren Organopolysiloxane aus Einheiten der Formel (IV) sind
H₂N(CH₂)₃-Si(OC₂H₅)₂-O-Si(CH₃)(OC₂H₅)₂,
H₂N(CH₂)₃-Si(OC₂H₅)(CH₃)-O-Si(OCH₃)₃,
H₂N(CH₂)₂NH(CH₂)₃-Si(OC₂H₅)₂-O-Si(CH₃)(OC₂H₅)₂,
H₂N(CH₂)₂NH(CH2)₃-Si(OCH₃)(CH₃)-O-Si(OCH₃)₃,
H₂N(CH₂)₂NH(CH₂)₃-Si(OC₂H₅)(CH₃)-O-Si(OCH₃)₃,
cyclo-C₆H₁₁NH(CH₂)₃-Si(OC₂H₅)₂-O-Si(CH₃)(OC₂H₅)₂,
cyclo-C₆H₁₁NH(CH₂)₃-Si(OC₂H₅)(CH₃)-O-Si(OCH₃)₃,
H₂N(CH₂)₃-Si(OCH₃)₂-(O-Si(CH₃)₂)₁₋₁₀₀-O-Si(OCH₃)₂-(CH₂)₃NH₂,
H₂N(CH₂)₂NH(CH₂)₃-Si(OCH₃)₂-(O-Si(CH₃)₂)₁₋₁₀₀-0-Si(OCH₃)₂-(CH₂)₃ NH(CH₂)₂NH₂ und
cyclo-C₆H₁₁NH(CH₂)₃-Si(OCH₃)₂-(O-Si(CH₃)₂)₁₋₁₀₀-0-Si(OCH₃)₂-(CH₂)₃ NH-cyclo-C₆H₁₁ sowie deren Teilhydrolysate, wobei
H₂N(CH₂)₃-Si(OC₂H₅)-₂-O-Si(CH₃)(OC₂H₅)₂ bevorzugt ist.

Organosiliciumverbindungen aus Einheiten der Formel (IV) sind handelsübliche Produkte bzw. können nach in der Siliciumchemie gängigen Verfahren hergestellt werden.

Beispiele für Amine der Formel (III) sind Cyclohexylamin, Triethylamin, Trioctylamin, Butylamin, Dodecylamin, Diethyl-n-propylamin, Cyclohexylmethylamin, 2-Aminoethanol, 2-Amino-n-propanol, 2-Amino-2-methyl-1-propanol, 2-Dimethylamino-2-methyl-1-propanol, N,N-Diethylethanolamin, Ethylendiamin, Cocosfettamin, Cocosfettmethylamin, N,N-Dimethylethanolamin und Anilin.

Falls basischen Stickstoff aufweisende Verbindungen (5) eingesetzt werden, handelt es sich bevorzugt um Organosiliciumverbindungen aus Einheiten der Formel (IV).

Falls die erfindungsgemäßen Massen Komponente (5) enthalten, handelt es sich um Mengen von vorzugsweise 0,01 bis 5 Gewichtsteilen, bevorzugt 0,05 bis 2 Gewichtsteilen, jeweils bezogen auf 100 Gewichtsteile der erfindungsgemäßen Masse. Bevorzugt enthalten die erfindungsgemäßen Massen Komponente (5).

Beispiele für Füllstoffe (6) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Einen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Alüminium-Mischoxide großer BET-Oberfläche; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen. Falls Füllstoffe (6) eingesetzt werden, handelt es sich bevorzugt um hydrophobe pyrogene Kieselsäure und gefälltes oder gemahlenes Calciumcarbonat.

Falls die erfindungsgemäßen Massen Füllstoffe (6) enthalten, handelt es sich um Mengen von vorzugsweise 1 bis 70 Gewichtsteilen, bevorzugt 5 bis 50 Gewichtsteilen, jeweils bezogen auf 100 Gewichtsteile erfindungsgemäße Masse. Bevorzugt enthalten die erfindungsgemäßen Massen Füllstoffe (6).

Beispiele für die in den erfindungsgemäßen Massen gegebenenfalls eingesetzten Haftvermittler (7) sind Silane und Organopolysiloxane mit funktionellen Gruppen, wie beispielsweise solche mit Glycidoxypropyl-, Aminopropyl-, Aminoethylaminpropyl-, Ureidopropyl- oder Methacryloxypropylresten. Falls jedoch bereits eine andere Komponente, wie etwa Organosiliciumverbindung (1), (2), (4) oder (6), die genannten funktionellen Gruppen aufweist, kann auf einen Zusatz von Haftvermittler (7) verzichtet werden.

Falls die erfindungsgemäßen Massen Haftvermittler (7) enthalten, handelt es sich um Mengen von vorzugsweise 0,01 bis 3 Gewichtsteilen, bevorzugt 0,1 bis 0,5 Gewichtsteilen, jeweils bezogen auf 100 Gewichtsteile der erfindungsgemäßen Masse. Bevorzugt enthalten die erfindungsgemäßen Massen keine Haftvermittler (7).

Beispiele für Weichmacher (8) sind bei Raumtemperatur flüssige, durch Trimethylsiloxygruppen endblockierte Dimethylpolysiloxane, insbesondere mit Viskositäten bei 25°C im Bereich zwischen 50 und 1000 mPas, sowie hochsiedende Kohlenwasserstoffe, wie zum Beispiel Paraffinöle, Dialkylbenzole, Dialkylnaphthaline oder Mineralöle bestehend aus naphthenischen und paraffinischen Einheiten, Polyglykole, insbesondere Polypropylenglykole, die gegebenenfalls substituiert sein können, hochsiedende Ester, wie z.B Phthalate, Zitronensäureester oder Diester von Dicarbonsäuren, flüssige Polyester oder Methacrylate sowie Alkylsulfonsäureester.

Falls die erfindungsgemäßen Massen Weichmacher (8) enthalten, handelt es sich um Mengen von vorzugsweise 0,1 bis 70 Gewichtesteilen, bevorzugt 1 bis 50 Gewichtsteilen, jeweils bezogen auf 100 Gewichtsteile der erfindungsgemäßen Masse. Bevorzugt enthalten die erfindungsgemäßen Massen Weichmacher (8).

Beispiele für Additive (9) sind Mittel zur Beeinflussung der Vernetzungsgeschwindigkeit, wie organische oder anorgansiche Säuren, Pigmente, Farbstoffe, Riechstoffe, Oxidationsinhibitoren, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren und Thixotropiermittel, wie beispielsweise Polyether, und organischen Lösungsmittel, wie Alkylaromaten, wie Phosphorsäureester und Phosphonsäuren, Biocide wie Fungicide, Bactericide, Acarizide und Modulregler wie Polydimethylsiloxane mit einer OH-Endgruppe.

Falls die erfindungsgemäßen Massen Additive (9) enthalten, handelt es sich um Mengen von vorzugsweise 0,0001 bis 20 Gewichtsteilen, bevorzugt um 0,01 bis 10 Gewichtsteile und besonders bevorzugt 0,1 bis 3 Gewichtsteilen, jeweils bezogen auf 100 Gewichtsteile der erfindungsgemäßen Masse. Bevorzugt enthalten die erfindungsgemäßen Massen Additive (9).

Bevorzugt enthalten die erfindungsgemäßen Massen keine über die Bestandteile (1) bis (9) hinausgehenden Bestandteile.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Die gegebenenfalls eingesetzten Bestandteile (3), (4), (5), (6), (7), (8) und (9) können nun in Komponente (A), Komponente (B) oder in beiden enthalten sein. Eine oder mehrere der Bestandteile (3) bis (9) können aber auch eine oder mehrere weitere Komponenten bilden. Enthält einer der gegebenenfalls eingesetzte Bestandteile (3) bis (9) Wasser und/oder OH-Gruppen, so wird dieser bevorzugt in Komponente (B) eingesetzt.

Falls bei den erfindungsgemäßen Massen Komponente (A) Füllstoffe (6) enthalten soll, so wird das eventuell im Füllstoff enthaltene Wasser bevorzugt entfernt. Dies kann z.B. dadurch erfolgen, dass die Menge an Bestandteil (1) entsprechend erhöht wird, wobei die hydrolysierbaren Gruppen Y in Bestandteil (1) mit dem Wasser abreagieren, damit eine lagerstabile Komponente (A) erhalten wird. Bestandteil (1) wirkt dabei als sog. Scavenger.

Die erfindungsgemäßen Massen können nun zwei oder mehr Komponenten enthalten. Beispielsweise sind 3-Komponenten-Systeme bevorzugt, wenn Katalysatoren (3) oder Additive (9) weder mit Organosilciumverbindung (21) noch mit Organosiliciumverbindung (1) lagerstabile Komponenten bilden.

Die erfindungsgemäßen Massen bestehen aus zwei Komponenten (A) und (B).

Bei den erfindungsgemäßen Massen handelt es sich um solche (Masse 3), enthaltend
Komponente (A) bestehend aus
- im Wesentlichen lineare Siloxane (1) mit jeweils einer Endgruppe [A-CR¹₂] an einem jeden Kettenende, gegebenenfalls Katalysator (3), gegebenenfalls weiteren Vernetzer (4), gegebenenfalls basischen Stickstoff aufweisende Verbindung (5), Füllstoffe (6), Weichmacher (8) und Additive (9), sowie Komponente (B) bestehend aus
- Organosilciumverbindung (22) und/oder Wasser (21), gegebenenfalls basischen Stickstoff aufweisende Verbindung (5), Füllstoffe (6), Weichmacher (8) und Additive (9), wobei Masse 3 besonders bevorzugt keine weiteren Komponenten enthält.

Die Mischungsverhältnisse der einzelnen Komponenten können nun in weiten Bereichen variieren und sind dem Fachmann bekannt. Bevorzugt betragen die Mischungsverhältnisse der beiden Komponenten (A) zu (B) der erfindungsgemäßen Massen von 0,2:100 bis 100:0,2, wobei diese Mischungsverhältnisse auf das Gewicht wie auf das Volumen bezogen sein können.

Bei den erfindungsgemäßen Massen handelt es sich um solche des Typs "Masse 3". Der Fachmann kann auf dieser Basis sehr leicht Massen bereit stellen, die ein in der Praxis bewährtes Mischungsverhältnis der beiden Komponenten (A) zu (B) von 1:2 bis 2:1 aufweisen. Dabei kann sich das Mischungsverhältnis sowohl auf das Gewicht als auch auf das Volumen der Komponenten beziehen, bevorzugt bezieht es sich aber auf das Volumen, denn viele automatisierte Dosiersysteme dosieren in der Industrie aus Gründen der Einfachheit volumenbezogen. Der wichtigste Vorteil von Mischungsverhältnissen im Bereich von 1:1 besteht jedoch darin, dass die Einhaltung enger Dosiergrenzen wesentlich besser möglich ist.

Bezogen auf die Dosiertechnik ist es in der Praxis allerdings völlig unerheblich, welche Komponente den größeren Anteil an der Gesamtmasse aufweist.

Ganz besonders bevorzugt handelt es sich bei den erfindungsgemäßen Massen um solche, die frei sind von zinnorganischen Verbindungen.

Zur Bereitung der einzelnen Komponenten der erfindungsgemäßen Massen können die jeweils darin enthaltenen Bestandteile in beliebiger Reihenfolge miteinander vermischt werden. Dieses Vermischen kann bei Raumtemperatur und dem Druck der umgebenden Atmosphäre, also etwa 900 bis 1100 hPa, oder unter vermindertem Druck von etwa 20 hPa bis 800 hPa erfolgen. Falls erwünscht, kann dieses Vermischen aber auch bei höheren Temperaturen erfolgen, z.B. bei Temperaturen im Bereich von 35 bis 135°C. Falls gewünscht kann geheizt oder gekühlt werden.

Das erfindungsgemäße Vermischen von Komponente (A) findet bevorzugt unter weitestgehendem Ausschluss von Wasser aus der umgebenden Atmosphäre statt, z.B durch Überschleierung mit trockener Luft.

Da bei der Herstellung der einzelnen Komponenten an offener Atmosphäre sehr oft Luft in die Vormischung gelangt, kann diese vorteilhafterweise durch einen Entgasungsschritt entfernt werden, um Blasen im ausgehärteten Material zu vermeiden.

Bei den einzelnen Komponenten der erfindungsgemäßen Masse handelt es sich um lagerstabile Vormischungen, die dann an Ort und Stelle vermischt werden können.

Die Vernetzung der erfindungsgemäßen Massen erfolgt beim Inkontaktbringen der Komponenten (A) und (B) vorzugsweise bei Raumtemperatur, wobei das mechanische Vermischen bevorzugt ist. Sie kann, falls erwünscht, auch bei höheren oder niedrigeren Temperaturen als Raumtemperatur erfolgen, z.B. bei -5° bis 15°C oder bei 30° bis 50°C.

Vorzugsweise wird die Vernetzung bei einem Druck von 100 bis 1100 hPa, insbesondere beim Druck der umgebenden Atmosphäre, durchgeführt.

Entsprechend der Viskosität der fertigen Mischung der Komponenten kann das Material zum Beispiel durch Spritzen, Gießen oder Streichen weiter verarbeitet werden. Die Viskositäten können dabei von sehr niedrigviskos, wenn zum Beispiel die Beschichtung von Untergründen gewünscht ist, bis sehr hochviskos reichen, wenn zum Beispiel eine Abformung über Kopf gewünscht ist.

Ein weiterer Gegenstand der vorliegenden Erfindung sind Formkörper, hergestellt durch Vernetzung der erfindungsgemäßen Massen.

Die erfindungsgemäßen Massen können für alle Verwendungszwecke eingesetzt werden, für die bei Raumtemperatur zu Elastomeren vernetzende Massen eingesetzt werden können.

Die erfindungsgemäßen Massen eignen sich somit ausgezeichnet beispielsweise für Abformungen, Beschichtungen, Verklebungen, Abdichtungen, Vergüsse oder zur Herstellung von Formteilen.

Ein Vorteil der erfindungsgemäßen Massen besteht darin, dass die Vernetzung sehr schnell erfolgt.

Die erfindungsgemäßen Massen haben den Vorteil, dass die Massen bei der Vernetzung einen sehr geringen Schrumpf aufweisen.

Ein weiterer Vorteil der erfindungsgemäßen Massen besteht darin, dass sie bei langen Verarbeitungszeiten sehr schnell ihre Endeigenschaften erreichen.

Ein Vorteil der erfindungsgemäßen Massen besteht darin, dass sie bei höheren Temperaturen reversionsstabil sind.

Die erfindungsgemäßen Massen haben den Vorteil, dass keine oder nur sehr geringe Mengen an ökologisch bedenklichen zinnorganischen Verbindungen enthalten sind.

Ein Vorteil der erfindungsgemäßen Massen besteht darin, dass auf einfache Weise Mischungsverhältnisse der einzelnen Komponenten realisiert werden können, welche die automtisierte Verarbeitung erleichtern.

Ein Vorteil der erfindungsgemäßen Massen besteht weiterhin darin, dass Mischungsverhältnisse der beiden Komponenten (A) und (B) im Bereich von 1:1 ermöglicht werden, wodurch eine sehr genaue Einhaltung des Mischungsverhältnisses abgesichert werden kann.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des weiteren beziehen sich alle Angaben von Teilen und Prozentsätzen, soweit nichts anderes angegeben ist, auf das Gewicht.

Die Shore-A-Härte wird nach DIN (Deutsche Industrie Norm) 53505-87 bestimmt.

Die Reißfestigkeit wird nach DIN 53504-85 S2 bestimmt.

Die Reißdehnung wird nach DIN 53504-85 S2 bestimmt.

Im Folgenden wurde die Beurteilung der hergestellten alkoxyterminierten Polydimethylsiloxane auf die weitestgehende Abwesenheit von Silanolgruppen (Si-OH-Gehalt kleiner 30 Gew.-ppm) anhand des sog. Titanat-Schnelltests durchgeführt:
10 g hergestelltes Polymer (z.B. solches, das vor der Reaktion bei einer Viskosität von 80 000 mPa.s 420 Gew.ppm Si-gebundene OH-Gruppen enthalten hatte) und Isopropyltitanat (ca. 0,1 g) wurden mit einem Spatel 3 Minuten verrührt. Wenn eine nach oben gezogene Probe in einem dünnen Faden nach unten lief, war die Probe weitestgehend silanolfrei. Wenn die nach oben gezogene Probe abriss, so enthielt sie noch mehr als 30 Gew.-ppm Sigebundene OH-Gruppen.
Der Vorteil dieses Testes liegt vor allem darin, dass er sehr schnell durchgeführt werden kann.

Die Topfzeit einer Masse war die Zeit, bei der die Mischung nicht mehr frei fließend war, sondern beim kurzen Umrühren und Herausziehen des Spatels bereits elastische Anteile aufwies.

Die Zeiten der Klebfreiheit wurden durch Berührung der Materialobefläche mit einem Finger ermittelt. Das heißt, nach dieser Zeit war keine Klebrigkeit mehr vorhanden.

### Beispiel 1

50 g eines α,ω-Dihydroxypolydimethylsiloxans (B) mit einer Viskosität von 80 000 mPas wurden mit 0,25 g Cyclohexylaminomethyltriethoxysilan (A) mit einem Laborspatel in einem PE-Becher vermischt.
Die Topfzeit betrug ca. 0,3 Minuten.

### Beispiel 2

50 g eines α,ω-Dihydroxypolydimethylsiloxans mit einer Viskosität von 80 000 mPas (B) wurden mit 0,25 g 4-(Triethoxysilylmethyl)tetrahydro-1,4-oxazin (A) mit einem Laborspatel in einem PE-Becher vermischt.
Die Topfzeit betrug ca. 11 Minuten.

### Beispiel 3

50 g eines α,ω-Dihydroxypolydimethylsiloxans mit einer Viskosität von 6 000 mPas (B)wurden mit 0,5 g 4-(Triethoxysilylmethyl)tetrahydro-1,4-oxazin (A) mit einem Laborspatel in einem PE-Becher vermischt.
Die Topfzeit betrug ca. 18 Minuten.
Nach 3 Stunden war das Material auch in tiefen Schichten klebfrei.

### Beispiel 4

Es wurde eine (A)-Komponente in einem Labordissolvermischer hergestellt durch Vermischen von zunächst 100 g eines α,ω-Dihydroxypolydimethylsiloxans mit einer Viskosität von 20 mPas und 70 g 4-(Triethoxysilylmethyl)tetrahydro-1,4-oxazin. Nach 20 Minuten wurde der Titanattest durchgeführt, der nachwies, dass weniger als 30 ppm Silanol in der Mischung vorhanden waren. Anschließend wurde in die Mischung 30 g Tetraethoxysilan eingearbeitet. Abschließend wurde 5 Minuten bei einem Druck von ca. 200 hPa entgast.

1 Gewichtsteil der so hergestellten Komponente (A) wurden 1 Minute mit 10 Gewichtsteilen einer Komponente (B) mit Hilfe eines Laborspatels intensiv vermischt, wobei die (B)-Komponente ein α,ω-Dihydroxypolydimethylsiloxan mit einer Viskosität von 6 000 mPas war.
Die Topfzeit betrug ca. 60 Minuten.
Das Material war nach 4 Stunden klebfrei.

### Beispiel 5

Es wurde eine (A)-Komponente in einem Labordissolvermischer hergestellt durch Vermischen von 480 g methylterminiertem Polydimethylsiloxan mit einer Viskosität von 1 000 mPas, 10 g Tetraethoxysilan und 10 g 4-(Triethoxysilylmethyl)tetrahydro-1,4-oxazin.
Weiterhin wurde eine (B)-Komponente in einem Labordissolvermischer hergestellt durch Vermischen von 300 g eines α,ω-Dihydroxypolydimethylsiloxans mit einer Viskosität von 6 000 mPas, 100 g eines methylterminierten Polydimethylsiloxans mit einer Viskosität von 1 000 mPas und 100 g einer mit Hexamethyldisilazan hydrophobierten Kieselsäure mit einer BET-Oberfläche von ca. 200 m²/g und einem Wassergehalt von ca. 0,2 % (käuflich erhältlich unter der Bezeichnung HDK® H 2000 bei der Wacker Chemie AG, D-München). Nach einer Mischzeit von 20 Minuten wurde noch 5 Minuten bei 200 hPa entgast.

Dann wurden 100 g der Komponente (B) 1 Minuten mit 4,5 g der Komponente (A) mit Hilfe eines Laborspatels intensiv vermischt. Die Topfzeit der Masse betrug ca. 30 Minuten.
Das Material war nach 8 Stunden klebfrei.

Dann wurden weitere 100 g der Komponente (B) 1 Minuten mit 4,5 g der Komponente (A) mit Hilfe eines Laborspatels intensiv vermischt und in einem Exsikkator ca. 0,5 Minuten entgast. Diese Masse wurde in runde PTFE-Formen mit einem Durchmesser von 10,0 cm gefüllt, wobei der überstehende Teil mit einem glatten Abstreifer entfernt wurde.
Nach der Aushärtung und Entfernung aus der Form wurde 2 Tage später an den 2 mm dicken, klebfreien Fellen ein Durchmesser von 9,9 cm ermittelt, das heißt, der lineare Schrumpf betrug 1,0 %.

### Beispiel 6

Es wurde eine (A)-Komponente in einem Labordissolvermischer hergestellt durch Vermischen von 480 g methylterminiertem Polydimethylsiloxan mit einer Viskosität von 1 000 mPas, 10 g Tetraethoxysilan, 0,5 g Laurinsäure und 10 g 4-(Triethoxysilylmethyl)tetrahydro-1,4-oxazin.

Weiterhin wurde eine (B)-Komponente in einem Labordissolvermischer hergestellt durch Vermischen von zunächst 300 g eines α,ω-Dihydroxypolydimethylsiloxans mit einer Viskosität von 6000 mPas, 100 g eines methylterminierten Polydimethylsiloxans mit einer Viskosität von 1 000 mPas und 100 g einer mit Hexamethyldisilazan hydrophobierten Kieselsäure mit einer BET-Oberfläche von ca. 200 m²/g und einem Wassergehalt von ca. 0,2 % (käuflich erhältlich unter der Bezeichnung HDK® H 2000 bei der Wacker Chemie AG, D-München). Nach einer Mischzeit von 20 Minuten wurde noch 5 Minuten bei 200 hPa entgast.

Dann wurden 100 g der Komponente (B) 1 Minuten mit 4,5 g der Komponente (A) mit Hilfe eines Laborspatels intensiv vermischt. Die Topfzeit der Masse betrug ca. 40 Minuten.
Das Material war nach 10 Stunden klebfrei.

### Beispiel 7

Es wurde eine (A)-Komponente in einem Labordissolvermischer hergestellt durch Vermischen von 480 g methylterminiertem Polydimethylsiloxan mit einer Viskosität von 1 000 mPas, 10 g Tetraethoxysilan und 10 g 4-(Triethoxysilylmethyl)tetrahydro-1,4-oxazin.

Weiterhin wurde eine (B)-Komponente in einem Labordissolvermischer hergestellt durch Vermischen von 300 g eines α,ω-Dihydroxypolydimethylsiloxans mit einer Viskosität von 6000 mPas, 100 g eines methylterminierten Polydimethylsiloxans mit einer Viskosität von 1 000 mPas, 1,5 g Dibutylamin und 100 g einer mit Hexamethyldisilazan hydrophobierten Kieselsäure mit einer BET-Oberfläche von ca. 200 m²/g und einem Wassergehalt von ca.0,4 % (käuflich erhältlich unter der Bezeichnung HDK® V 15 bei der Wacker Chemie AG, D-München). Nach einer Mischzeit von 20 Minuten wurde noch 5 Minuten bei 200 hPa entgast.

Dann wurden 100 g der Komponente (B) 1 Minuten mit 4,5 g der Komponente (A) mit Hilfe eines Laborspatels intensiv vermischt. Die Topfzeit der Masse betrug ca. 20 Minuten.
Das Material war nach 6 Stunden auch in tiefen Schichten klebfrei.

### Beispiel 8

In einem Labordissolver wurden 2000 g eines α,ω-Dihydroxypolydimethylsiloxans mit einer Viskosität von 80 000 mPas, 750 g eines methylterminiertem Polydimethylsiloxans mit einer Viskosität von 1 000 mPas, 58 g Tetraethoxysilan, 15 g Dibutylamin, 51 g 4-(Triethoxysilylmethyl)tetrahydro-1,4-oxazin 20 Minuten innig miteinander vermischt. Mit dem Titanattest konnte danach kein Silanol nachgewiesen werden. Anschließend wurden 275 g hydrophile pyrogene Kieselsäure mit einer BET-Oberfläche von 150 m²/g und einem Wassergehalt von ca. 0,4 % (käuflich erhältlich unter der Bezeichnung HDK® V 15 bei der Wacker Chemie AG, D-München) und 1,1 g eines Zinnkatalysators, der hergestellt wurde durch Umsetzung von Di-n-butylzinndiacetat und Tetraethoxysilan, zugegeben. Danach wurden weitere 15 Minuten gemischt. Zum Entgasen der Mischung wurde ein Unterdruck von ca. 200 hPa angelegt und nochmals 5 Minuten gemischt. Danach wurde die fertige Mischung in handelsübliche Polyethylenkartuschen abgefüllt.

100 g der so erhaltenen (A)-Komponente wurden mit 100 g der in Beispiel 5 beschriebenen (B)-Komponente ca. 1 Minuten unter Vakuum in einem Labordissolver vermischt. Anschließend wurde die Masse in PTFE-Formen gefüllt und aushärten gelassen.

Nach 24 Stunden wurde an den 2 mm dicken, klebfreien Fellen folgende Werte ermittelt: Härte 26 Sh A, Reißdehnung 460 % und Zugfestigkeit 2,0 MPa.

## Patentansprüche

1. Durch Kondensationsreaktion vernetzbare Massen in Form einer 2-Komponenten-Zusammensetzung, **dadurch gekennzeichnet, dass** es sich um solche (Masse 3) handelt, enthaltend
Komponente (A) bestehend aus
- im Wesentlichen lineare Siloxane (1) mit jeweils einer Endgruppe [A-CR¹₂] an einem jeden Kettenende, wobei A gleich oder verschieden sein kann und einen über Stickstoff, Sauerstoff, Schwefel oder Phosphor gebundenen organischen Rest bedeutet und R¹ gleich oder verschieden sein kann und Wasserstoffatom oder einwertige, gegebenenfalls substituierte Kohlenwasserstoffreste darstellt, gegebenenfalls Katalysator (3), gegebenenfalls weiteren Vernetzer (4), gegebenenfalls basischen Stickstoff aufweisende Verbindung (5), Füllstoffe (6), Weichmacher (8) und Additive (9), sowie
Komponente (B) bestehend aus
- im Wesentlichen linearen OH-terminierten Organopolysiloxanen (22), gegebenenfalls basischen Stickstoff aufweisende Verbindung (5), Füllstoffe (6), Weichmacher (8) und Additive (9).

2. Massen gemäß Anspruch 1, **dadurch gekennzeichnet, dass** es sich bei Rest A um Reste R³R⁴N-, R⁵O-, R⁹S-, (R¹⁰O)₂P(=O)- und O=C=N- handelt, wobei R³ und R⁴ jeweils unabhängig voneinander Wasserstoffatom oder einwertige, gegebenenfalls substituierte Kohlenwasserstoffreste bedeuten, wobei die Gruppierung R³R⁴N-auch zu einem Ring verbunden sein kann, der auch noch andere Elemente anstelle von Kohlenstoffatomen enthalten kann, R⁵ einen gegebenenfalls substituierten Kohlenwasserstoffrest bedeutet oder einen Rest CH₃(C=CH₂)-(C=O)- und CH³-O-(C=O)- darstellt, R⁹ und R¹⁰ jeweils unabhängig voneinander gleich oder verschieden sein können und einen gegebenenfalls substituierten Kohlenwasserstoffrest bedeuten.

3. Massen gemäß einem oder mehreren der Ansprüche 1 bis 2, **dadurch gekennzeichnet, dass** es sich bei Rest A um Reste R³R⁴N-handelt, wobei R³ und R⁴ jeweils unabhängig voneinander Wasserstoffatom oder einwertige, gegebenenfalls substituierte Kohlenwasserstoffreste bedeuten.

4. Massen gemäß einem oder mehreren der Ansprüche 1 bis 3, **dadurch gekennzeichnet, dass** die Mischungsverhältnisse der beiden Komponenten (A) zu (B) der erfindungsgemäßen Massen von 0,2:100 bis 100:0,2 betragen, wobei diese Mischungsverhältnisse auf das Gewicht wie auf das Volumen bezogen sein können.

5. Verfahren zur Herstellung der Massen gemäß einem oder mehreren der Ansprüche 1 bis 4, **dadurch gekennzeichnet, dass** zur Bereitung der einzelnen Komponenten die jeweils darin enthaltenen Bestandteile in beliebiger Reihenfolge miteinander vermischt werden können.

6. Formkörper, hergestellt durch Vernetzung der Massen gemäß einem oder mehreren der Ansprüche 1 bis 4.

## Claims

1. Materials crosslinkable by condensation reaction in the form of a 2-component composition, **characterized in that** it is one (material 3) containing
component (A) consisting of
- substantially linear siloxanes (1) having in each case a terminal group [A-CR¹₂] at each chain end, wherein A may be identical or different and is an organic radical bonded via nitrogen, oxygen, sulfur or phosphorus and
R¹ may be identical or different and is a hydrogen atom or monovalent, optionally substituted hydrocarbon radicals, optionally catalyst (3), optionally further crosslinking agents (4), optionally compound (5) having basic nitrogen, fillers (6), plasticizers (8) and additives (9), and
component (B) consisting of
- substantially linear OH-terminated organopolysiloxanes (22), optionally compound (5) having basic nitrogen, fillers (6), plasticizers (8) and additives (9).

2. Materials according to Claim 1, **characterized in that** radicals A are radicals R³R⁴N-, R⁵O-, R⁹S-, (R¹⁰O)₂P(=O)- and O=C=N-, in which R³ and R⁴, in each case independently of one another, are a hydrogen atom or monovalent, optionally substituted hydrocarbon radicals, it also being possible for the group R³R⁴N- to be linked to form a ring which may also contain other elements instead of carbon atoms, R⁵ is an optionally substituted hydrocarbon radical or a radical CH₃(C=CH₂)-(C=O)- and CH³-O-(C=O)-, R⁹ and R¹⁰, in each case independently of one another, may be identical or different and are an optionally substituted hydrocarbon radical.

3. Materials according to one or more of Claims 1 to 2, **characterized in that** radicals A are radicals R³R⁴N-, in which R³ and R⁴, in each case independently of one another, are a hydrogen atom or monovalent, optionally substituted hydrocarbon radicals.

4. Materials according to one or more of Claims 1 to 3, **characterized in that** the mixing ratios of the two components (A) to (B) of the materials according to the invention are from 0.2:100 to 100:0.2, it being possible for these mixing ratios to be based on weight as well as volume.

5. Process for the preparation of the materials according to one or more of Claims 1 to 4, **characterized in that**, for the preparation of the individual components, the constituents present in each case therein can be mixed with one another in any desired sequence.

6. Molding produced by crosslinking the materials according to one or more of Claims 1 to 4.

## Revendications

1. Matières réticulables par réaction de condensation, sous forme d'une composition bicomposant, **caractérisées en ce qu'**il s'agit d'une telle (matière 3) contenant
un composant (A) constitué
- de siloxanes essentiellement linéaires (1) comportant chacun un groupe terminal [A-CR¹₂] à chaque extrémité de chaîne, A pouvant être le même ou différent et représentant un radical organique lié par un atome d'azote, d'oxygène, de soufre ou de phosphore et R¹ pouvant être le même ou différent et représentant un atome d'hydrogène ou des radicaux hydrocarbonés monovalents, éventuellement substitués, éventuellement d'un catalyseur (3), éventuellement d'autres agents de réticulation (4), éventuellement d'un composé (5) comportant de l'azote basique, de charges (6), de plastifiants (8) et d'additifs (9), ainsi
qu'un composant (B) constitué
- d'organopolysiloxanes essentiellement linéaires (22) à terminaison OH, éventuellement d'un composé (5) comportant de l'azote basique, de charges (6), de plastifiants (8) et d'additifs (9).

2. Matières selon la revendication 1, **caractérisées en ce que** pour ce qui est du radical A il s'agit de radicaux R³R⁴N-, R⁵O-, R⁹S-, (R¹⁰O)₂P(=O)- et O=C=N-, R³ et R⁴ représentant chacun indépendamment l'un de l'autre un atome d'hydrogène ou des radicaux hydrocarbonés monovalents éventuellement substitués, le groupement R³R⁴N- pouvant également être lié en un cycle qui peut également contenir encore d'autres éléments au lieu d'atomes de carbone, R⁵ représentant un radical hydrocarboné éventuellement substitué ou un radical CH₃(C=CH₂)- (C=O)- et CH₃-O-(C=O)-, R⁹ et R¹⁰ pouvant indépendamment l'un de l'autre être identiques ou différents et représentant un radical hydrocarboné éventuellement substitué.

3. Matières selon une ou plusieurs des revendications 1 et 2, **caractérisées en ce que** pour ce qui est du radical A il s'agit de radicaux R³R⁴N-, R³ et R⁴ représentant chacun indépendamment l'un de l'autre un atome d'hydrogène ou des radicaux hydrocarbonés monovalents éventuellement substitués.

4. Matières selon une ou plusieurs des revendications 1 à 3, **caractérisées en ce que** les rapports de mélange des deux composants (A) à (B) des matières selon l'invention valent de 0,2:100 à 100:0,2, ces rapports de mélange pouvant être basés sur le poids comme sur le volume.

5. Procédé pour la production des matières selon une ou plusieurs des revendications 1 à 4, **caractérisé en ce que** pour la préparation des composants individuels on peut mélanger entre eux en un ordre quelconque les constituants contenus dans ceux-ci.

6. Corps moulés, produits par réticulation des matières selon une ou plusieurs des revendications 1 à 4.
